# EUROPÄISCHE PATENTSCHRIFT

(11) **EP 0 782 788 B1**
(45) Veröffentlichungstag und Bekanntmachung des Hinweises auf die Patenterteilung: **29.04.1998**
(21) Anmeldenummer: 95908187.8
(22) Anmeldetag: 08.02.1995
(51) Int. Cl.: H02P 9/14, G05B 9/03

(54) **VERFAHREN UND VORRICHTUNG ZUR ÜBERWACHUNG VON MINDESTENS ZWEI REDUNDANTEN REGLERKANÄLEN EINER ERREGEREINRICHTUNG EINES ELEKTRISCHEN GENERATORS**
METHOD AND DEVICE FOR MONITORING AT LEAST TWO REDUNDANT CONTROL CHANNELS FOR AN ELECTRIC-GENERATOR EXCITER
PROCEDE ET DISPOSITIF DE SURVEILLANCE D'AU MOINS DEUX CANAUX REDONDANTS DE REGULATION DE L'EXCITATEUR D'UN GENERATEUR ELECTRIQUE

(30) Priorität: 28.09.1994 DE 4434705
(43) Veröffentlichungstag der Anmeldung: 09.07.1997
(73) Patentinhaber: SIEMENS AKTIENGESELLSCHAFT, 80333 München (DE)
(72) Erfinder: FORK, Kurt, D-91077 Neunkirchen (DE); AMLER, Gerald, D-90469 Nürnberg (DE)
(86) Internationale Anmeldenummer: DE9500163
(87) Internationale Veröffentlichungsnummer: WO9610288

(56) Entgegenhaltungen:
- EP-A- 0 606 809
- DE-C- 3 225 455
- US-A- 4 432 048
- US-A- 4 985 824

## Beschreibung

Die Erfindung bezieht sich auf ein Verfahren zur Überwachung von mindestens zwei redundanten Reglerkanälen einer Erregereinrichtung eines elektrischen Generators. Sie bezieht sich weiter auf eine Vorrichtung zur Durchführung des Verfahrens.

Um die Ausfallsicherheit einer technischen Einrichtung zu erhöhen, werden üblicherweise redundante Komponenten eingesetzt. Derartige redundante Komponenten bestehen üblicherweise aus zwei oder mehreren gleichwertigen Reglerkanälen, wobei zusätzlich eine Entscheidungseinrichtung erforderlich ist, die einen störungsfrei arbeitenden oder das richtige Ergebnis liefernden Reglerkanal auswählt. Dazu wird den gleichwertigen, voneinander getrennt arbeitenden Reglerkanälen als Entscheidungseinrichtung ein Überwachungskanal zugeordnet, der eine Anzahl von Überwachungsfunktionen durchführt und zur Freigabe einer Stellgröße von einem auf den anderen Reglerkanal umschaltet. Eine Vorrichtung zur Überwachung zweier redundanter Regelkanäle mit einem Überwachungskanal, der mit jedem Reglerkanal verbunden ist über einen Datenbus zur Übertragung von für den Betrieb der Erregereinrichtung charakteristischen Meßwerten, ist beispielsweise aus der Druckschrift US-C-4,432,048 bekannt.

Der Einsatz eines Überwachungskanals ist daher prinzipiell ein Kompromiß zwischen einfacher Redundanz und einer Zwei-aus-drei-Auswahl bei drei redundanten Reglerkanälen. Dabei ist das Wesen eines herkömmlichen Überwachungskanals digitaler Natur, d.h. aus digitalen Eingangsgrößen werden digitale Ausgangsgrößen abgeleitet, wobei der Überwachungskanal konkret die Aufgabe hat, zu entscheiden, ob der eine Reglerkanal oder der andere Reglerkanal eingeschaltet wird. Allerdings besteht das Problem, aufgrund welcher Entscheidungskriterien eine sichere Aussage darüber getroffen werden kann, welcher Reglerkanal störungsfrei arbeitet, oder ob und gegebenenfalls welcher Reglerkanal gestört ist. Insbesondere für den Fall, daß einerseits keiner der Reglerkanäle störungsfrei arbeitet, andererseits aber lediglich Teilfunktionen der Reglerkanäle gestört sind, folgt entweder unabhängig von der Art und dem Grad der Störung eine Abschaltung jedes der Reglerkanäle oder eine unkontrollierte Regelung, was letztendlich zu einem vollständigen Versagen der Regelung führen kann.

Auch eine Auswertung von in den einzelnen Reglerkanälen aufgrund einer Eigenüberwachung erstellten Meldungen ermöglicht häufig keine eindeutige Aussage über die Richtigkeit der Arbeitsweise der Reglerkanäle oder über die Plausibilität der von diesen erstellten Ergebnissen.

Der Erfindung liegt daher die Aufgabe zugrunde, ein Überwachungsverfahren für redundante Reglerkanäle einer Erregereinrichtung eines elektrischen Generators, anzugeben, das eine Auswahl des am zuverlässigsten arbeitenden Reglerkanals gewährleistet. Dies soll bei einer geeigneten Vorrichtung mit besonders einfachen Mitteln erreicht werden.

Bezüglich des Verfahrens, bei dem für jeden Reglerkanal ein die Zuverlässigkeit seiner Arbeitsweise charakterisierender Status bestimmt wird, und bei dem in Abhängigkeit vom Status der Reglerkanäle einer der Reglerkanäle Aufgewählt wird, wird diese Aufgabe erfindungsgemäß dadurch gelöst, daß die Statusbestimmungen für die Reglerkanäle und die Auswahl eines der Reglerkanäle mittels Fuzzy Logic erfolgt, und wobei innerhalb eines einstellbaren Schwellwertbereichs mindestens einer der Reglerkanäle ausgewählt wird.

Um in besonders zuverlässiger Weise eine mögliche Störung zu lokalisieren und/oder zu diagnostizieren, werden aus für die Erregereinrichtung charakteristischen Meßwerten jedes Reglerkanals Zustände gebildet, die mit die Zuverlässigkeit des Reglerkanals bestimmenden Wichtungsfaktoren versehen werden, wobei diese Zustände nach für den Betrieb der Erregereinrichtung relevantem technologischem Wissen verknüpft werden, und wobei die Auswahl eines der Reglerkanäle mittels eines Vergleichs der mit den Wichtungsfaktoren versehenen Zustände erfolgt.

Die aufgrung der erforderlichen Redundanz auch der Mittel zur Meßwerterfassung und Meßwertübertragung besonders vielfältigen Überwachungsaufgaben der redundanten Reglerkanäle der Erregereinrichtung werden in dem der Fuzzy Logic zugrundeliegenden Regelwerk berücksichtigt, das auf der Grundlage bestehenden technologischen Wissens erstellt wird und beliebig erweitert werden kann. Dabei ist, insbesondere in einem Kraftwerk mit allgemein bekannter Regelstrecke, die Voraussetzung erfüllt, daß die Regelung vorhersagbar arbeitet. Danüber hinaus ist eine Regelung auch dann sichergestellt, wenn keiner der Reglerkanäle einwandfrei arbeitet, wobei dann stets derjenige Reglerkanal ausgewählt wird, der den geringsten Störungsgrad aufweist und dessen Zuverlässigkeit innerhalb des einstellbaren Schwellwertbereichs liegt.

Bezüglich der Vorrichtung der obengenannten Art wird die Aufgabe erfindungsgemäß dadurch gelöst, daß der Überwachungskanal umfaßt:
a) einen Rechnerbaustein zur Bearbeitung der Meßwerte nach Fuzzy-Logik und zur Qualifizierung von daraus abgeleiteten Zuständen,
b) einen Verknüpfungsbaustein zum Verknüpfen der qualifizierten Zustände und zur Bestimmung eines Status der Arbeitsweise für jeden Reglerkanal, und
c) einen Baustein zum Vergleichen des Status jedes Reglerkanals mit einem einstellbaren Schwellwert und zur Bildung eines Signals zur Auswahl eines der Regelkanäle.

Ein Ausführungsbeispiel der Erfindung wird anhand einer Zeichnung näher erläutert. Darin zeigt:
Figur 1 eine Überwachungsvorrichtung für zwei redundante Reglerkanäle einer Erregereinrichtung eines elektrischen Generators, und
Figur 2 ein Funktionsschema der Überwachungsvorrichtung.

Einander entsprechende Teile sind in beiden Figuren mit den gleichen Bezugszeichen versehen.

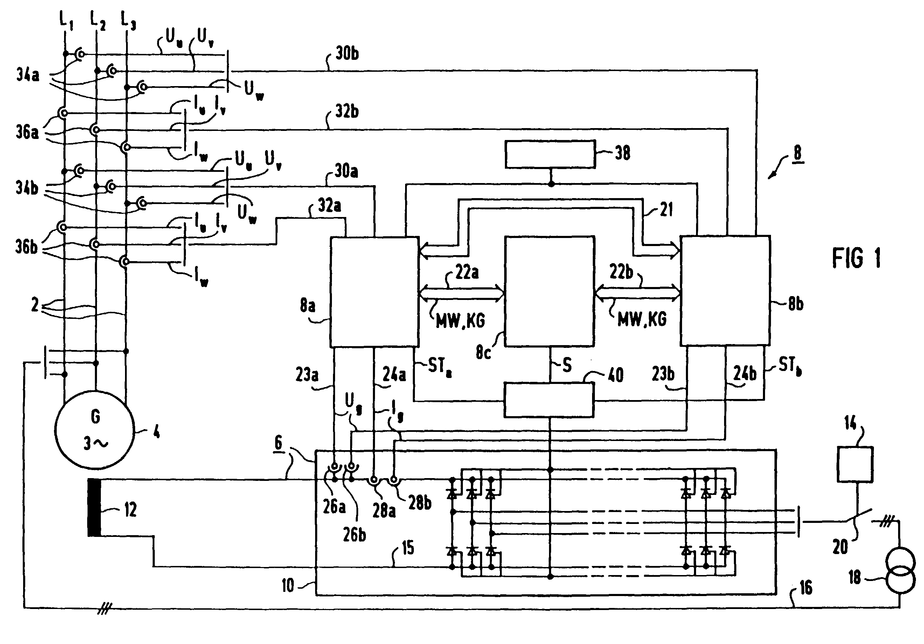

Figur 1 zeigt einen mit einem dreiphasigen elektrischen Netz 2 verbundenen Generator 4 und dessen Erregereinrichtung 6. Diese ist mit einer aus zwei gleichwertigen Reglerkanälen 8a, 8b und einem Überwachungskanal 8c aufgebauten Reglereinrichtung 8 verbunden. Die Erregereinrichtung 6 umfaßt ein Erregerstellglied 10, zum Beispiel einen Thyristorstromrichter, eine Erreger- oder Läuferwicklung 12 und eine Entregungsschaltung 14. Diese dient zum Zu- oder Abschalten des die Leistung führenden Teils oder Leistungsteils 15 des Erregerstellgliedes 10 an eine bzw. von einer dreiphasigen Eigenbedarfsschiene 16, die über einen Transformator 18 mit dem Netz 2 verbunden ist; dies ist durch einen geöffneten Schalter 20 angedeutet.

Die Reglerkanäle 8a, 8b sind über einen Datenbus 21 miteinander und jeweils über einen Datenbus 22a, 22b mit dem Überwachungskanal 8c verbunden. Die Reglerkanäle 8a, 8b sind weiter zur Meßwertaufnahme sowohl mit dem dreiphasigen Netz 2 als auch mit dem Leistungsteil 15 des Erregerstellgliedes 10 verbunden. Dazu ist der Regelkanal 8a über Meßleitungen 23a und 24a mit einem Spannungswandler 26a bzw. einem Stromwandler 28a verbunden, die ihrerseits mit dem Leistungsteil 15 des Erregerstellgliedes 10 verbunden sind. Ebenso ist der Regelkanal 8b über Meßleitungen 23b und 24b mit einem Spannungswandler 26b bzw. einem Stromwandler 28b verbunden. Die Reglerkanäle 8a und 8b sind in gleicher Weise über Meßleitungen 30a, 32a und 30b, 32b jeweils mit Spannungswandlern 34a, 34b und mit Stromwandlern 36a bzw. 36b verbunden, die ihrerseits jeweils mit einer der drei Phasen L₁, L₂ und L₃ des elektrischen Netzes 2 verbunden sind.

Die Reglerkanäle 8a, 8b sind ferner mit einer Leitwarte 38 verbunden. Von dort erfolgen Meldungen über den jeweiligen Betriebszustand eines aus dem Generator 4 und einer (nicht dargestellten) Turbine aufgebauten Turbosatzes. So erfolgt zum Beispiel eine Meldung, wenn der Turbosatz im Anfahr- oder Normalbetrieb arbeitet und/oder wenn der Generator 4 an ein Insel- oder Verbundnetz angeschlossen ist. Des weiteren erfolgt eine Meldung über den Zustand der Reglerkanäle 8a, 8b, das heißt, ob zum Beispiel einer der Reglerkanäle 8a oder 8b abgeschaltet ist.

An den Überwachungskanal 8c werden von den beiden Reglerkanälen 8a und 8b über die Datenbusse 22a bzw. 22b für die Erregereinrichtung 6 charakteristische Meßwerte MW übertragen. Diese sind Ist-Werte der von den Spannungswandlern 26a, 26b erfaßten Erregerspannung U_{g} und des von den Stromwandlern 28a, 28b erfaßten Erregerstroms I_{g}. Diese sind außerdem Ist-Werte der von den Spannungswandlern 34a, 34b erfaßten Generatorspannungen Uᵤ, Uᵥ, U_{w} und der von den Stromwandlern 36a, 36b erfaßten Generatorströme Iᵤ, Iᵥ, I_{w} der drei Phasen L₁, L₂ bzw. L₃ des elektrischen Netzes 2. Der Überwachungskanal 8c empfängt diese Meßwerte MW und/oder daraus abgeleitete Kenngrößen KG bevorzugt in Form von Telegrammen. Dabei erfolgt eine Vorverarbeitung der Meßwerte MW zur Bildung der Kenngrößen KG, zum Beispiel eine Grenzwertüberwachung oder Plausibilitätskontrolle, bereits in den Reglerkanälen 8a, 8b. Die Vorverarbeitung der Meßwerte MW kann aber auch im Überwachungskanal 8c erfolgen.

Die Überwachung und Ausfallerkennung der Reglerkanäle 8a, 8b erfolgt im Überwachungskanal 8c. Dazu wird aus den Meßwerten MW und/oder Kenngrößen KG, die für die Erregereinrichtung 6 charakteristisch sind und von den Reglerkanälen 8a, 8b geliefert werden, mittels Fuzzy-Logik und anhand von für die Erregereinrichtung 6 relevantem technologischem Wissen ein Status für die Arbeitsweise oder Funktionsfähigkeit der beiden Reglerkanäle 8a, 8b bestimmt. Ein in dem Überwachungskanal 8c in Abhängigkeit vom Status der Reglerkanäle 8a, 8b gebildetes und den Reglerkanälen 8a, 8b gemeinsames Signal S wird einer Umschaltvorrichtung 40 aufgegeben. Diese dient zum Umschalten von einem auf den anderen Reglerkanal 8a oder 8b, so daß stets mindestens einer der Reglerkanäle 8a oder 8b seine Stellgröße STₐ bzw. ST_{b} an das Erregerstellglied 10 - zum Beispiel die Zündimpulse für den Thyristorstromrichter - abgibt.

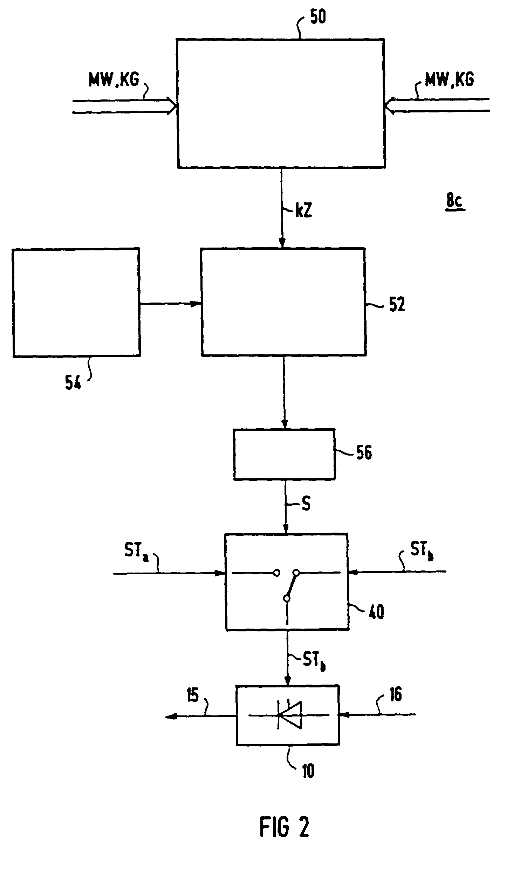

Ein Funktionsschema der Arbeitsweise des Überwachungskanals 8c zur Überwachung und Ausfallerkennung der Reglerkanäle 8a, 8b ist in Figur 2 dargestellt. Die dem Überwachungskanal 8c zugeführten Meßwerte MW und/oder Kenngrößen KG werden zunächst in einem Rechnerbaustein 50 mittels Fuzzy-Logik in unscharfe Zustände umgewandelt. Dazu wird zum Beispiel aus den Meßwerten MW mittels geeigneter Zugehörigkeitsfunktionan, zum Beispiel mittels Dreiecksfunktionen, der Zustand der Meßwert ist klein, der Meßwert ist mittel oder der Meßwert ist groß" gebildet. Aus dem Anteil des aktuellen Meßwerts MW an dem jeweiligen Zustand wird ein Wichtungsfaktor gebildet, der zur Qualifizierung der Zustände mit diesen verknüpft wird. Im folgenden sind der Zustand mit Z und der Wichtungsfaktor mit k bezeichnet.

So wird zum Beispiel der von dem Stromwandler 36a des Reglerkanals 8a gemessene Ist-Wert des Generatorstroms Iᵤ mittels der Zugehörigkeitsfunktionen umgewandelt in die Zustände "Iᵤ ist zu 20 % klein" und " Iᵤ ist zu 80 % mittel". Die daraus abgeleiteten Wichtungsfaktoren k sind dann zum Beispiel 0,2 bzw. 0,8, so daß der Zustand Z "Iᵤ ist klein" mit dem Faktor 0,2 und der Zustand Z "Iᵤ ist mittel" mit dem Faktor 0,8 verknüpft sind.

Diese mit den Wichtungsfaktoren k verknüpften Zustände Z werden in einem Verknupfungsbaustein 52 mit anderen, ebenfalls in dem Rechnerbaustein 50 gebildeten qualifizierten Zuständen kZ verknüpft. Diese Verknüpfung erfolgt nach für den Betrieb der Erregereinrichtung 6 relevantem technologischem Wissen, das in Form von Regeln in einer Wissensbasis 54 abgelegt ist. Die Auswertung der Wissensbasis 54 bei einer konkreten Anwendung erfolgt mittels des Rechnerbausteins 50 (Inferenzkomponente), der die Verarbeitung des Wissens in Form von logischen Schlußfolgerungen, das heißt anhand der Regeln, steuert. Die zur Bildung der Zustände Z oder der qualifizierten Zustände kZ eingesetzte Fuzzy-Logik, die kontinuierliche Zwischenwerte zwischen reinen Ja/Nein-Aussagen erlaubt, dient dabei zur Verarbeitung unsicheren Wissens. Der zusammen mit der Wissensbasis 54 in der Art eines Expertensystems aufgebaute Verknupfungsbaustein 52 ermöglicht auch die Verarbeitung scharfer oder numerischer Werte, die ebenfalls mittels des Rechnerbausteins 50 in die bei der Fuzzy-Logik üblichen sprachlichen Größen umgesetzt werden.

So wird zum Beispiel der Ist-Wert des Generatorstroms Iᵤ verknüpft mit dem Ist-Wert der Generatorspannung Uᵤ. Ist der in dem Rechnerbaustein 50 für die Generatorspannung Uᵤ ermittelte Zustand Z "Uᵤ ist groß" und ist der Wichtungsfaktor k = 0,8, so ergibt eine "und"-verknüpfung der Zustände Z "Iᵤ ist mittel" und "Uᵤ ist groß" den Status "Störung" für den Reglerkanal 8a. Dabei wird die Wahrscheinlichkeit dieser Aussage oder dieses Ergebnisses ermittelt aus einer Verknüpfung der Wichtungsfaktoren k dieser Zustände Z mittels eines Operators, zum Beispiel eines Multiplizierers. Liegt die Wahrscheinlichkeit der Störung oberhalb eines Schwellwertes, so wird der Reglerkanal 8a abgeschaltet und es erfolgt - mittels der Umschaltvorrichtung 40 - eine Umschaltung auf den Reglerkanal 8b.

Liegt dagegen die Zuverlässigkeit des Reglerkanals 8a innerhalb eines Schwellwertbereichs von z.B. 60% bis 90% oder darüber, und liegt die Zuverlässigkeit des anderen Reglerkanals 8b außerhalb dieses Schwellwertbereichs, so bleibt der Reglerkanal 8a in Betrieb und es erfolgt keine Umschaltung. Mit anderen Worten: Solange die Zuverlässigkeit mindestens eines der Reglerkanäle 8a oder 8b innerhalb dieses, vorzugsweise einstellbaren, Schwellwertbereichs liegt, ist ein vollständiges Versagen der Regelung der Erregereinrichtung 6 vermieden, auch wenn keiner der Reglerkanäle 8a bzw. 8b absolut störungs- oder fehlerfrei arbeitet. Dabei wird jeweils der Reglerkanal 8a, 8b mit der höchsten Zuverlässigkeit oder dem geringsten Störungsgrad ausgewählt. Die Schwellwertabfrage oder Schwerpunktbildung und die Erzeugung des Signals S erfolgt in einem Baustein 56.

In dem Verknupfungsbaustein 52 werden in gleicher Weise auch aus den Meßwerten MW und/oder Kenngrößen KG der beiden redundanten Reglerkanäle 8a, 8b in dem Baustein 50 gebildete Zustände Z verknüpft und miteinander verglichen. Aus dem Ergebnis dieses Vergleichs wird eine Aussage über die Arbeitsweise der Erregereinrichtung 6 und/oder der Meßwertübertragung zwischen den Wandlern 26, 28 oder den Wandlern 34, 36 und den Reglerkanälen 8a bzw. 8b abgeleitet. Liegt zum Beispiel nur in einem der Reglerkanäle 8a oder 8b eine Unsymmetrie bezüglich der Ist-Werte der Generatorspannungen Uᵤ, Uᵥ und U_{w} oder der Generatorströme Iᵤ, Iᵥ und I_{w} der drei Phasen L₁, L₂ und L₃ des elektrischen Netzes 2 vor, so ist die Wahrscheinlichkeit für eine Störung in der Erregereinrichtung 6 oder im elektrischen Netz 2 gering, zum Beispiel für einen Kurzschluß im Leistungsteil 15 bzw. für einen einphasigen Kurzschluß im elektrischen Netz 2, während der die Unsymmetrie aufweisende Reglerkanal 8a bzw. 8b mit großer Wahrscheinlichkeit gestört ist. Ergibt beispielsweise die Summe der drei Ist-Werte der Generatorspannungen Uᵤ, Uᵥ und U_{w} einen Wert, der wesentlich von Null verschieden ist, so läßt dies auf einen Defekt eines der drei Spannungswandler oder Ist-Wertgeber 34a oder 34b und damit auf einen Ausfall eines Reglerkanals 8a bzw. 8b schließen.

Durch die Verknüpfung der mittels Fuzzy-Logik aus den Meßwerten MW und/oder Kenngrößen KG gebildeten Zustände Z anhand von Regeln, die in systematischer Form in der Wissensbasis 54 abgelegt sind, ist eine zuverlässige Überwachung und Ausfallerkennung der Reglerkanäle 8a, 8b gewährleistet. Die Zuverlässigkeit eines dabei abgeleiteten Ergebnisses kann durch zusätzliche Verknüpfungen anhand einer Anzahl von unterschiedlichen Regeln aus der Wissensbasis 54 erhöht werden. Die Wissensbasis 54 kann auch nach der Inbetriebnahme der Reglereinrichtung 8 aufgrund von Betriebserfahrungen erweitert werden.

## Patentansprüche

1. Verfahren zur Überwachung von mindestens zwei redundanten Reglerkanälen (8a, 8b) einer Erregereinrichtung (6) eines elektrischen Generators (4), bei dem für jeden Reglerkanal (8a, 8b) ein die Zuverlässigkeit seiner Arbeitsweise charakterisierender Status bestimmt wird, und bei dem in Abhängigkeit vom Status der Reglerkanäle (8a, 8b) einer der Reglerkanäle (8a, 8b) ausgewählt wird, wobei die Statusbestimmung für die Reglerkanäle (8a, 8b) und die Auswahl eines der Reglerkanäle (8a, 8b) mittels Fuzzy Logic erfolgt, und wobei innerhalb eines einstellbaren Schwellwertbereichs mindestens einer der Reglerkanäle (8a, 8b) ausgewählt wird.

2. Verfahren nach Anspruch 1,
**dadurch gekennzeichnet**, daß aus für die Erregereinrichtung (6) charakteristischen Meßwerten (MW, KG) jedes Reglerkanals (8a, 8b) Zustände (Z) gebildet werden, wobei die mit die Zuverlässigkeit des Reglerkanals (8a, 8b) bestimmenden Wichtungsfaktoren (12) versehenen Zustände (Z) verknüpft werden, und wobei die Auswahl eines der Reglerkanäle (8a, 8b) mittels eines Vergleichs der mit den Wichtungsfaktoren (12) versehenen Zustände (Z) erfolgt.

3. Vorrichtung zur Überwachung von mindestens zwei redundanten Reglerkanälen (8a, 8b) einer Erregereinrichtung (6) eines elektrischen Generators (4) zur Durchführung des Verfahrens nach Anspruch 1 oder 2, mit einem Überwachungskanal (8c), der mit jedem Reglerkanal (8a, 8b) verbunden ist über einen Datenbus (22a, 22b) zur Übertragung von für den Betrieb der Erregereinrichtung (6) charakteristischen Meßwerten (MW, KG), dadurch gekennzeichnet, daß der Überwachungskanal (8c) umfaßt:
a) einen Rechnerbaustein (50) zur Bearbeitung der Meßwerte (MW, KG) nach Fuzzy-Logik und zur Qualifizierung von daraus abgeleiteten Zuständen (Z),
b) einen Verknüpfungsbaustein (52) zum Verknüpfen der qualifizierten Zustände (kZ) und zur Bestimmung eines Status der Arbeitsweise für jeden Reglerkanal (8a, 8b), und
c) einen Baustein (56) zum Vergleichen des Status jedes Reglerkanals (8a, 8b) mit einem einstellbaren Schwellwert und zur Bildung eines Signal (S) zur Auswahl eines der Reglerkanäle (8a, 8b).

## Claims

1. Method for monitoring at least two redundant controller channels (8a, 8b) of an exciter device (6) of an electric generator (4), in which, for each controller channel (8a, 8b), a status characterizing the reliability of the way in which it operates is determined, and in which, as a function of the status of the controller channels (8a, 8b), one of the controller channels (8a, 8b) is chosen, the determination of the status for the controller channels (8a, 8b) and the choice of one of the controller channels (8a, 8b) being made by means of fuzzy logic, and at least one of the controller channels (8a, 8b) being chosen within a threshold value range that can be set.

2. Method according to Claim 1, characterized in that states (Z) are formed from measured values (MW, KG) of each controller channel (8a, 8b) that are characteristic of the exciter device (6), the states (Z), which are provided with weighting factors (12) determining the reliability of the controller channel (8a, 8b), being logically combined, and the choice of one of the controller channels (8a, 8b) being made by means of a comparison of the states (Z) provided with the weighting factors (12).

3. Device for monitoring at least two redundant controller channels (8a, 8b) of an exciter device (6) of an electric generator (4) in order to carry out the method according to Claim 1 or 2, having a monitoring channel (8c), which is connected to each controller channel (8a, 8b) via a data bus (22a, 22b) for the transmission of measured values (MW, KG) that are characteristic of the operation of the exciter device (6), characterized in that the monitoring channel (8c) comprises:
a) a computer module (50) for processing the measured values (MW, KG) in accordance with fuzzy logic and for qualifying states (Z) derived therefrom,
b) a logic combining module (52) for logically combining the qualified states (kZ) and for determining a status of the way each controller channel (8a, 8b) operates, and
c) a module (56) for comparing the status of each controller channel (8a, 8b) with a threshold value that can be set and for forming a signal (S) for choosing one of the controller channels (8a, 8b).

## Revendications

1. Procédé de surveillance d'au moins deux canaux de régulation redondants (8a, 8b) d'une excitatrice (6) d'une génératrice électrique (4), dans lequel on détermine pour chaque canal de régulation (8a, 8b) un statut caractérisant la fiabilité de son mode de fonctionnement et dans lequel on sélectionne en fonction du statut des canaux de régulation (8a, 8b) un des canaux de régulation (8a, 8b), la détermination de statut pour les canaux de régulation (8a, 8b) et la sélection d'un des canaux de régulation (8a, 8b) s'effectuant au moyen d'une logique floue et au moins l'un des canaux de régulation (8a, 8b) étant sélectionné dans un domaine réglable à valeurs de seuil.

2. Procédé selon la revendication 1,
caractérisé par le fait qu'on forme des états (Z) à partir de valeurs mesurées (MW, KG), caractéristiques de l'excitatrice (6), de chaque canal de régulation (8a, 8b), les états (Z) munis de facteurs de pondération (k) qui déterminent la fiabilité du canal de régulation (8a, 8b) étant combinés et la sélection d'un des canaux de régulation (8a, 8b) s'effectuant au moyen d'une comparaison des états (Z) munis des facteurs de pondération (k).

3. Dispositif de surveillance d'au moins deux canaux de régulation redondants (8a, 8b) d'une excitatrice (6) d'une génératrice électrique (4) pour la mise en oeuvre du procédé selon la revendication 1 ou 2, comprenant un canal de surveillance (8c) qui est relié à chaque canal de régulation (8a, 8b) par l'intermédiaire d'un bus de données (22a, 22b) destiné à la transmission de valeurs mesurées (MW, KG) caractéristiques du fonctionnement de l'excitatrice (6), caractérisé par le fait que le canal de surveillance (8c) comprend :
a) un module de calcul (50) pour le traitement des valeurs mesurées (MW, KG) selon une logique floue et pour la qualification d'états (Z) déduits de ces valeurs mesurées,
b) un module logique (52) pour la combinaison des états qualifiés (kZ) et pour la détermination d'un statut du mode de fonctionnement pour chaque canal de régulation (8a, 8b), et
c) un module (56) pour la comparaison du statut de chaque canal de régulation (8a, 8b) avec une valeur de seuil réglable et pour la formation d'un signal (S) destiné à la sélection d'un des canaux de régulation (8a, 8b).
